(19) Europäisches Patentamt
European Patent Office
Office européen des brevets

(11) Veröffentlichungsnummer: **0 003 542**
**B1**

(12) **EUROPÄISCHE PATENTSCHRIFT**

(45) Veröffentlichungstag der Patentschrift: **25.11.81**

(51) Int. Cl.³: **C 08 K 5/34**, C 08 G 73/06

(21) Anmeldenummer: **79100244.7**

(22) Anmeldetag: **29.01.79**

(54) **Neue Polyalkylpiperidinderivate von s-Triazinen, ihre Verwendung als Stabilisatoren für Polymere und die so stabilisierten Polymere.**

(30) Priorität: **08.02.78 CH 1402/78**

(43) Veröffentlichungstag der Anmeldung: **22.08.79 Patentblatt 79/17**

(45) Bekanntmachung des Hinweises auf die Patenterteilung: **25.11.81 Patentblatt 81/47**

(84) Benannte Vertragsstaaten: **CH DE FR GB IT**

(56) Entgegenhaltungen: **DE-A-2 636 144**
**FR-A-2 357 559**
**FR-A-2 372 187**

(73) Patentinhaber: **CIBA-GEIGY AG, Patentabteilung Postfach, CH-4002 Basel (CH)**

(72) Erfinder: **Rody, Jean, Dr., Rütiring 82, CH-4125 Riehen (CH)**

**EP 0 003 542 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Neue Polyalkylpiperidinderivate von s-Triazinen, ihre Verwendung als Stabilisatoren für Polymere und die so stabilisierten Polymere

Die Erfindung betrifft neue Polyalkylpiperidinderivate von s-Triazinen und ihre Verwendung als Stabilisatoren für Polymere.

Es handelt sich hierbei um Verbindungen der Formel I oder II

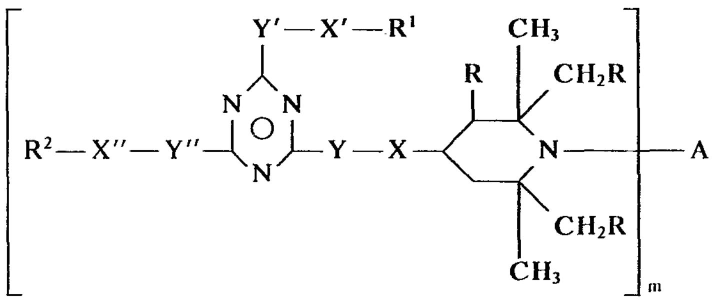

(I)

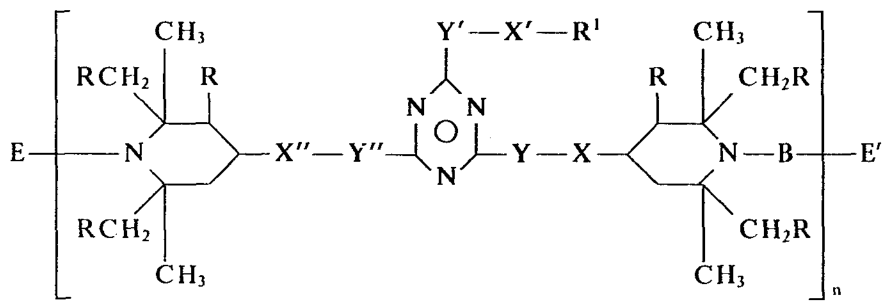

(II)

worin

m 2, 3 oder 4 ist, n 2 bis 50 ist,
X, X' und X'' eine direkte Bindung, $C_1$—$C_4$ Alkylen oder $-OCH_2CH_2CH_2-$, dessen O nicht an Y, Y' oder Y'' gebunden ist, darstellen,
Y, Y' und Y'' —O—, —S—, —NH— oder $-NR^3-$ darstellen,
R Wasserstoff oder $C_1$—$C_4$ Alkyl bedeutet,
$R^1$, $R^2$ und $R^3$ $C_1$—$C_{18}$ Alkyl, $C_2$—$C_8$ Alkoxyalkyl, $C_2$—$C_4$ Hydroxyalkyl, $C_5$—$C_{12}$ Cycloalkyl, $C_7$—$C_{12}$ Aralkyl, $C_3$—$C_{18}$ Alkenyl, $C_6$—$C_{10}$ Aryl, durch 1 oder 2 $C_1$—$C_8$ Alkylgruppen und/oder OH und/oder $C_1$—$C_4$ Alkoxy substituiertes Phenyl oder eine Polyalkylpiperidinylgruppe der Formel III darstellt

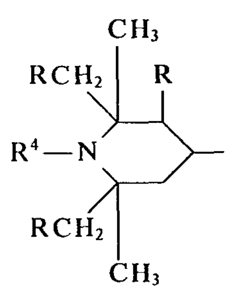

(III)

oder im Falle, daß Y' oder Y'' $-NR^3-$ ist und X' oder X'' eine direkte Bindung ist, $R^1$ und $R^3$ zusammen mit dem N-Atom einen Pyrrolidin-, Piperidin- oder Morpholinring bilden,
$R^4$ Wasserstoff, $\dot{O}$, $C_1$—$C_{12}$ Alkyl, Allyl oder Benzyl bedeutet,
A, wenn m 2 ist, $C_2$—$C_{12}$ Alkylen, $C_4$—$C_8$ Alkenylen, Xylylen oder einen Rest der Formel

$-CH_2-C\equiv C-CH_2-$

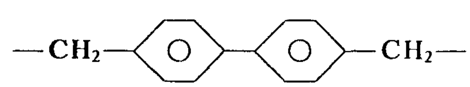

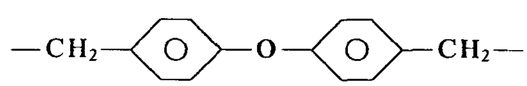

$-CH_2-COO-R^5-OOC-CH_2-$ $\quad -CH_2-CH(OH)-CH_2-$

oder

$-CH_2CH(OH)CH_2-D-CH_2CH(OH)CH_2-$

darstellt, wenn m 3 ist, eine Gruppe der Formel

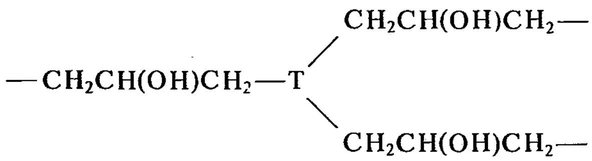

darstellt und
wenn m 4 ist, eine Gruppe der Formel

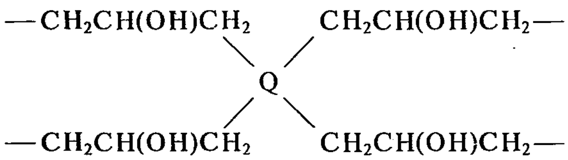

darstellt,

B $\quad$ $C_2$–$C_{12}$ Alkylen, $C_4$–$C_8$ Alkenylen, Xylylen oder einen Rest der Formel

$-CH_2-COO-R^5-OOC-CH_2-$ $\quad -CH_2-CH(OH)-CH_2-$

oder

$-CH_2CH(OH)CH_2-D-CH_2CH(OH)CH_2-$

darstellt,

$R^5$ $\quad$ $C_2$–$C_8$ Alkylen, $C_4$–$C_8$ Oxaalkylen oder Cyclohexylen darstellt,

D $\quad$ einen zweiwertigen Rest der Formel

$-O-R^6-O-$ $\quad -O-C(O)-R^7-C(O)-O-$

$-OCH(R^8)CH_2O-R^6-OCH_2CH(R^8)O-$

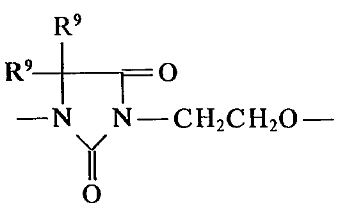

oder

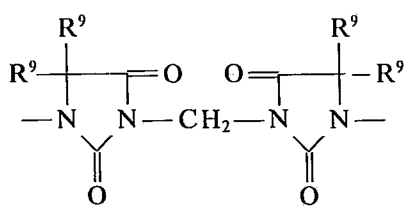

darstellt,

$R^6$ $\quad$ $C_2$–$C_{12}$ Alkylen, $C_6$–$C_{12}$ Cycloalkylen, $C_6$–$C_{12}$ Arylen oder –Phenylen–Z–Phenylen– darstellt, worin Z

$-CH_2-$ $\quad >C(CH_3)_2$ $\quad -SO_2-$ $\quad$ oder $\quad -O-$

bedeutet,

$R^7$ $\quad$ eine direkte Bindung, $C_1$–$C_{12}$ Alkylen, $C_2$–$C_6$ Alkenylen, $C_6$–$C_{12}$ Cycloalkylen oder Cycloalkenylen oder $C_6$–$C_{12}$ Arylen darstellt,

$R^8$ und $R^9$ $\quad$ Wasserstoff oder $C_1$–$C_4$ Alkyl sind,

T $\quad$ einen dreiwertigen Rest der Formeln

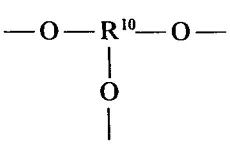

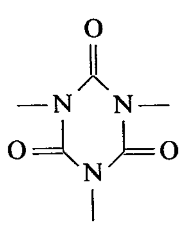

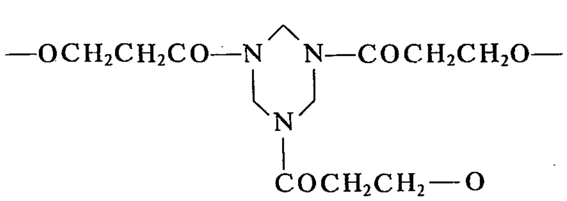

oder

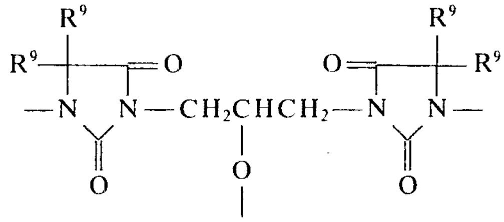

darstellt,

$R^{10}$ ein dreiwertiger aliphatischer Kohlenwasserstoffrest mit 3—10 C-Atomen ist,

Q einen vierwertigen Rest der Formel

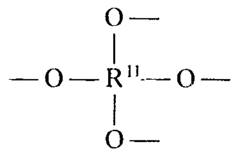

oder

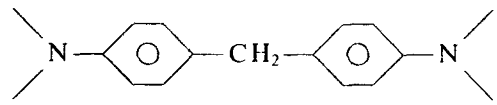

darstellt,

$R^{11}$ einen vierwertigen aliphatischen Kohlenwasserstoffrest mit 4—10 C-Atomen bedeutet und

E und E' Endgruppen darstellen.

$R^4$ als $C_1$—$C_{12}$ Alkyl kann dabei ein verzweigter oder unverzweigter Alkylrest sein, z. B. Methyl, Äthyl, Isopropyl, tert.Butyl, Hexyl, Isooctyl, Decyl oder Dodecyl. $R^1$, $R^2$ und $R^3$ können darüber heraus auch höhere Alkylreste, wie z. B. Tetradecyl, Hexadecyl oder Octadecyl, darstellen.

$R^1$, $R^2$, $R^3$ als Alkoxyalkyl können z. B. Methoxymethyl, 2-Methoxyäthyl, 2-Äthoxyäthyl, 2-Isopropoxyäthyl, 2-n-, sec.- oder tert.Butoxyäthyl oder 2-Butoxypropyl sein.

$R^1$, $R^2$, $R^3$ als Hydroxyalkyl können z. B. 2-Hydroxyäthyl, 2-Hydroxypropyl, 2-Hydroxybutyl oder 3-Hydroxypropyl sein.

$R^1$, $R^2$, $R^3$ als $C_5$—$C_{12}$ Cycloalkyl können beispielsweise Cyclopentyl, Cyclohexyl, 3-Methylcyclohexyl, 4-tert.Butylcyclohexyl oder Cyclododecyl sein.

$R^1$, $R^2$, $R^3$ als $C_6$—$C_{10}$ Aryl können Phenyl oder Naphthyl sein, wobei Phenyl bevorzugt ist.

$R^1$, $R^2$, $R^3$ als Aralkyl können z. B. Benzyl, Phenyläthyl, Phenylbutyl oder Naphthylmethyl sein.

$R^1$, $R^2$, $R^3$ als Alkenyl können z. B. Allyl, Methallyl, Hexenyl oder Oleyl sein.

$R^1$, $R^2$, $R^3$ als substituiertes Phenyl können z. B. p-Tolyl, 4-Hydroxyphenyl, 4-tert.Butylphenyl oder 3,5-Di-tert.butyl-4-hydroxyphenyl sein.

X als $C_1$—$C_4$ Alkylen kann beispielsweise Methylen, Äthylen, 1,3-Propylen, 1,2-Propylen, 1,1-Dimethyläthylen oder 2,2-Propylen sein.

A, B oder $R^6$ als Alkylen kann eine verzweigte oder unverzweigte Alkylengruppe sein, wie z. B. Äthylen, Tri-, Tetra-, Hexa-, Octa-, Deca- oder Dodecamethylen, 2,2-Dimethylpropylen-1,3, 1,2-Butylen oder 1,2-Propylen. $R^5$ ist ein zweiwertiger aliphatischer oder cycloaliphatischer Rest, beispielsweise Äthylen, 1,2-Propylen, 1,2-Butylen, 1,3-Propylen, 1,4-Butylen, 1,6-Hexylen, 1,4-Cyclohexylen oder 3-Oxapentylen-1,5.

A und B als Alkenylen können z. B. 1,4-Buten-2-ylen oder 1,6-Hexen-3-ylen sein.

$R^6$ als Cycloalkylen kann z. B. 1,4-Cyclohexylen oder 1,4-Cyclooctylen sein. $R^6$ als Arylen kann Phenylen, Naphthylen oder Diphenylen sein.

$R^7$ als Alkylen oder Alkenylen kann z. B. Methylen, 1,3-Propylen, Tetramethylen, 2,2-Dimethyl-1,3-propylen, Octamethylen, Dodecamethylen, Vinylen oder 1,4-Buten-2-ylen sein. $R^7$ als cyclischer Rest kann beispielsweise 1,2-Cyclopentylen, 1,2-Cyclohexylen, 1,2-Cyclohexen-4-ylen, 3,6-Endomethylencyclohexen-4-ylen-1,2, 1,2-Phenylen, 1,4-Phenylen oder 1,4-Naphthylen sein.

Es sind aus der DE-OS 2 319 816 bereits einfache Polyalkylpiperidinderivate von s-Triazinen der Formel IV bekannt

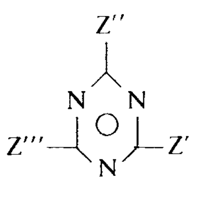

(IV)

worin mindestens einer der Substituenten Z', Z'', Z''' eine über O, S oder N an den Triazinrest gebundene Polyalkylpiperidingruppe ist. Diese bekannten Polyalkylpiperidinderivate von s-Triazinen sind ausgezeichnete Lichtschutzmittel für Polymere. Für bestimmte Verwendungszwecke ist jedoch die Flüchtigkeit und Migrationstendenz dieser bekannten Verbindungen für eine technische Anwendung zu hoch. Dies ist dann der Fall, wenn das Polymere in dünnen Schichten verwendet wird, wie z. B. in Fasern, Faserbändchen, Folien oder Lacken, und eine Stabilisierung über einen längeren Zeitraum erforderlich ist. Es wurde gefunden, daß die vorhin definierten neuen Polyalkylpiperidinderivate von s-Triazinen eine wesentlich geringere Flüchtigkeit bzw. Migrationstendenz besitzen, so daß sie auch in Polymeren von geringer Dicke über lange Zeit stabilisierend wirksam sind.

Bevorzugt sind solche Verbindungen der Formel I oder II, worin R Wasserstoff ist. Es handelt sich dabei um Derivate des 2,2,6,6-Tetramethylpiperidin. Bevorzugt sind ferner Verbindungen der Formel I oder II, worin Y, Y' und Y" –O–, –NH– oder $-NR_3-$ darstellen, insbesondere worin Y, Y' und Y" –NH– oder $-NR_3-$ darstellen.

Bevorzugt sind weiterhin Verbindungen der Formel I oder II, worin A oder B einen zweiwertigen Rest der Formel

$$-CH_2CH(OH)CH_2-D-CH_2CH(OH)CH_2-$$

insbesondere einen zweiwertigen Rest der Formel

$$-CH_2CH(OH)CH_2-O-R^6-O-CH_2CH(OH)CH_2-$$

darstellen.

Die Verbindungen der Formel I, in denen m 2 ist, können durch Umsetzung von 2 Mol einer Verbindung der Formel V

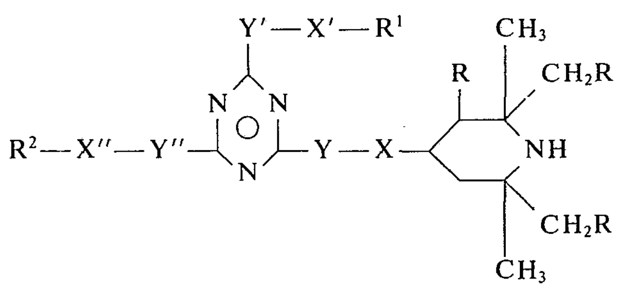
(V)

mit 1 Mol einer Dihalogenverbindung $AHal_2$ (Hal = Cl oder Br) oder eines Bisepoxides der Formel VI

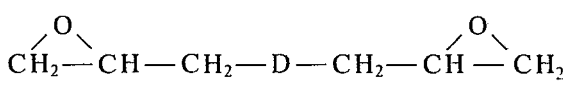
(VI)

oder mit 1 Mol Epichlorhydrin hergestellt werden.

Die Umsetzungen mit Dihalogenid oder Epichlorhydrin werden in Gegenwart von zur Halogenmenge äquivalenten Menge Alkali, Ammoniak oder eines Amins durchgeführt, vorzugsweise in Gegenwart tertiärer Amine. Die Reaktion mit Epichlorhydrin kann in einer ersten Stufe ohne Basenzusatz und in einer zweiten Stufe mit Basenzusatz ausgeführt werden. Die Reaktionen können in organischen Lösungsmitteln oder lösungsmittelfrei durchgeführt werden.

Geeignete Dihalogenide $AHal_2$ sind beispielsweise 1,4-Dibrombutan, 1,8-Dibromoctan, 1,6-Dichlorhexan, 1,4-Dichlorbuten-2, 1,4-Dichlorbutin, m- oder p-Xylylendichlorid, 4,4'-Di(chlormethyl)-diphenyl, Äthylenglykol-di-(chloracetat) oder Butandiol-1,4-di-(chloracetat).

Geeignete Bisepoxide sind z. B. Butandiol-1,4-diglycidyläther, Diglycidyläther von Bisphenol A, Tetrahydrophthalsäurediglycidylester, Trimethyladipinsäure-di-glycidylester, Terephthalsäure-diglycidylester, 1-Glycidyl-3-glycidyloxyäthyl-5,5-dimethyl-hydantoin oder 1,1'-Diglycidyl-3,3'-methylen-bis-5,5-dimethylhydantoin.

Die als Ausgangsmaterial verwendeten Triazinderivate der Formel V sind in der DE-OS 2 319 816 beschrieben. Sie können durch stufenweise Umsetzung von Cyanurchlorid mit den Verbindungen $R^1-X'-Y'H$ und einem 4-Hydroxy- oder 4-Amino-polyalkylpiperidin hergestellt werden.

Verbindungen der Formel I, worin m 3 oder 4 ist, können durch Umsetzung von 3 Mol bzw. 4 Mol einer Verbindung der Formel V mit 1 Mol eines Tris-Epoxides der Formel VII

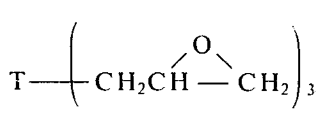
(VII)

oder Tetra-Epoxides der Formel VIII

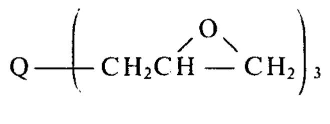

(VIII)

hergestellt werden. Beispiele für solche Tris- und Tetra-Epoxide sind: Triglycidyläther des Trimethylolpropan, Triglycidylisocyanurat, 1,3,5-Tris-(β-glycidyloxypropionyl)-hexahydro-s-triazin, Tetraglycidyläther des Pentaerythrit oder N,N,N',N'-Tetra-(glycidyl)-4,4'-diaminodiphenylmethans.

Zur Herstellung von Verbindungen der Formel II geht man von einer Verbindung der Formel V aus, in der $R^2$ ein Polyalkylpiperidinrest der Formel III ist, worin $R^4$ Wasserstoff ist. Durch Umsetzung einer solchen Verbindung mit einem Dihalogenid $AHal_2$ oder einem Bisepoxyd der Formel VI im annähernden Molverhältnis von 1:1 erhält man Polymere oder Oligomere der Formel II. Es kann hierbei auch ein Gemisch von Bisepoxiden verwendet werden. Der Index n stellt den durchschnittlichen Polymerisationsgrad dar und kann einen Wert von 2 bis 50 haben.

Die Höhe von n hängt von der Reinheit der Reaktionskomponenten und von den Reaktionsbedingungen (Zeit, Temperatur, Molverhältnis) ab. Bevorzugt sind oligomere Verbindungen, deren Polymerisationsgrad n 2 bis etwa 10 beträgt.

Die Endgruppen E sind Wasserstoff, sofern man diesen nicht durch eine Nachbehandlung substituiert. Die Endgruppen E' sind die reaktiven Gruppen der zweiten Komponente, also Halogen oder Epoxid, oder ein Umsetzungsprodukt einer solchen Gruppe. Die Umsetzung der reaktiven Endgruppe E' kann durch Nebenreaktionen, wie Halogenwasserstoffabspaltung oder Hydrolyse, spontan geschehen, oder man unterwirft das Produkt einer Nachbehandlung, bei der die Endgruppe umgewandelt wird, beispielsweise einer Alkoholyse oder einer Aminolyse. Eine solche Nachbehandlung kann beispielsweise den Zweck haben, den Polymerisationsgrad n niedrig zu halten oder das polymere Produkt stabiler zu machen. Solche Nachreaktionen sind in der makromolekularen Chemie als Endgruppenblockierung bekannt.

Eine Begrenzung des Polymerisationsgrades n kann aber auch dadurch erreicht werden, daß man eine der beiden Reaktanten im Überschuß verwendet. Bei dieser Methode erhält man Produkte, die vorwiegend identische Endgruppen haben. Beispielsweise erhält man bei Verwendung eines Überschusses des Dihalogenides oder Bisepoxides vorwiegend Verbindungen der Formel II, in denen E eine Gruppe —B—E' darstellt.

Bei der Herstellung dieser polymeren Verbindungen der Formel II können auch verzweigte, cyclisierte oder vernetzte Polymere entstehen. Verzweigungen der Vernetzungen sind vor allem bei Verwendung von Verbindungen der Formel V, in der sowohl $R^2$ wie $R^1$ eine Polyalkylpiperidingruppe darstellt, möglich. Solche Nebenprodukte brauchen aus dem Reaktionsgemisch nicht abgetrennt zu werden, da sie ebenfalls als Stabilisatoren verwendbar sind

Die Verbindungen der Formel I oder II sind als Stabilisatoren für Polymere verwendbar, sie zeichnen sich vor allem durch eine hervorragende Lichtschutzwirkung aus. Beispiele für Polymere, die durch Lichteinwirkung normalerweise geschädigt werden und durch den Zusatz von Verbindungen der Formel I oder II stabilisiert werden können, sind:

1. Polymere von Mono- und Diolefinen, beispielsweise Polyäthylen (das gegebenenfalls vernetzt sein kann, Polypropylen, Polyisobutylen, Polymethylbuten-1, Polymethylpenten-1, Polyisopren oder Polybutadien.
2. Mischungen der unter 1. genannten Polymeren, z. B. Mischungen von Polypropylen mit Polyäthylen oder mit Polyisobutylen.
3. Copolymere von Mono- und Diolefinen, wie z. B. Äthylen-Propylen-Copolymere, Propylen-Buten-1-Copolymere, Propylen-Isobutylen-Copolymere, Äthylen-Buten-1-Copolymere sowie Terpolymere von Äthylen mit Propylen und einem Dien, wie Hexadien, Dicyclopentadien oder Äthylidennorbonen.
4. Polystyrol.
5. Copolymere von Styrol oder α-Methylstyrol mit Dienen oder Acrylderivaten, wie z. B. Styrol-Butadien, Styrol-Acrylnitril, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Äthylen-Propylen-Dien-Terpolymeren; sowie Block-Copolymere des Styrols, wie z. B. Styrol-Butadien-Styrol, Styrol-Isopren-Styrol oder Styrol-Äthylen/Butylen-Styrol.
6. Graft- oder Pfropfcopolymere von Styrol, wie z. B. Styrol auf Polybutadien, Styrol und Acrylnitril auf Polybutadien sowie deren Mischungen mit den unter 5. genannten Copolymeren, wie sie als sogenannte ABS-Polymere bekannt sind.
7. Halogenhaltige Polymere, wie z. B. Polyvinylchlorid, Polyvinylidenchlorid, Polyvinylfluorid, Polychloropren, Chlorkautschuke und Copolymere wie Vinylchlorid-Vinylidenchlorid, Vinylchlorid-Vinylacetat oder Vinylidenchlorid-Vinylacetat.
8. Polymere, die sich von αβ-ungesättigten Säuren und deren Derivaten ableiten, wie Polyacrylate und Polymethacrylate, Polyacrylamide und Polyacrylnitril.

9. Polymere, die sich von ungesättigten Alkoholen und Aminen bzw. deren Acrylderivaten oder Acetalen ableiten, wie Polyvinylalkohol, Polyvinylacetat-, -stearat, -benzoat, -maleat, Polyvinylbutyral, Polyallalylphthalat, Polyallylmelamin und deren Copolymere mit anderen Vinylverbindungen, wie Äthylen/Vinylacetat-Copolymere.
10. Homo- und Copolymere von Epoxyden, wie Polyäthylenoxyd, Polypropylenoxyd oder deren Copolymere mit Bisgycidyläthern.
11. Polyacetale, wie Polyoxymethylen, sowie solche Polyoxymethylene, die als Comonomeres Äthylenoxyd enthalten.
12. Polyphenylenoxyde.
13. Polyurethane und Polyharnstoffe.
14. Polycarbonate.
15. Polysulfone.
16. Polyamide und Copolyamide, die sich von Diaminen und Dicarbonsäuren und/oder von Aminocarbonsäuren oder den entsprechenden Lactamen ableiten, wie Polyamid 6, Polyamid 6/6, Polyamid 6/10, Polyamid 11, Polyamid 12.
17. Polyester, die sich von Dicarbonsäuren und Dialkoholen und/oder von Hydroxycarbonsäuren oder den entsprechenden Lactonen ableiten, wie Polyäthylenterephthalat, Polybutylenterephthalat, Poly-1,4-dimethylolcyclohexanterephthalat, sowie Block-Polyäther-ester, die sich von Polyäthern mit Hydroxylendgruppen und Dicarbonsäuren ableiten.
18. Vernetzte Polymerisate, die sich von Aldehyden einerseits und Phenolen, Harnstoffen und Melaminen andererseits ableiten, wie Phenol-Formaldehyd-, Harnstoff-Formaldehyd- und Melamin-Formaldehydharze.
19. Alkydharze, wie Glycerin-Phthalsäure-Harze und deren Gemische mit Melamin-Formaldehydharzen.
20. Ungesättigte Polyesterharze, die sich von Copolyestern gesättigter und ungesättigter Dicarbonsäuren mit mehrwertigen Alkoholen, sowie Vinylverbindungen als Vernetzungsmitteln ableiten, wie auch deren halogenhaltige, schwerbrennbare Modifikationen.
21. Vernetzte Epoxidharze, die sich von Polyepoxiden ableiten, z. B. von Bis-glycidyläthern oder von cycloaliphatischen Diepoxiden.
22. Natürliche Polymere, wie Cellulose, Gummi, sowie deren polymerhomolog chemisch abgewandelte Derivate, wie Celluloseacetate, -propionate und -butyrate, bzw. die Celluloseäther, wie Methylcellulose.

Von diesen Polymeren sind die Gruppen 1–6, 13, 16 und 17 hervorzuheben, da in diesen Substraten die erfindungsgemäßen Stabilisatoren eine besonders markante Wirkung haben. Außerdem sind Polymere, die als Lackharze verwendet werden, von besonderer Bedeutung.

Die Stabilisatoren der Formel I oder II werden den Substraten in einer Konzentration von 0,005 bis 5 Gew.-%, berechnet auf das zu stabilisierende Material, einverleibt.

Vorzugsweise werden 0,01 bis 1,0, besonders bevorzugt 0,02 bis 0,5 Gew.-% der Verbindungen, berechnet auf das zu stabilisierende Material, in dieses eingearbeitet. Die Einarbeitung kann beispielsweise durch Einmischen mindestens eines der erfindungsgemäßen Lichtschutzmittel und gegebenenfalls weiterer Additive nach den in der Technik üblichen Methoden, vor oder während der Formgebung, oder auch durch Aufbringen der gelösten oder dispergierten Verbindungen auf das Polymere, gegebenenfalls unter nachträglichem Verdunsten des Lösungsmittels erfolgen.

Der so stabilisierte Kunststoff kann außerdem noch andere Stabilisatoren oder sonstige in der Kunststofftechnologie übliche Zusätze enthalten, wie sie beispielsweise in der DE-OS 2 349 962, Seiten 25–32, aufgeführt sind.

Bei der Mitverwendung bekannter Stabilisatoren können synergistische Effekte auftreten, was besonders bei Mitverwendung von anderen Lichtschutzmitteln oder von organischen Phosphiten häufig der Fall ist.

Von besonderer Bedeutung ist die Mitverwendung von Antioxydantien bei der Stabilisierung von Polyolefinen.

Die Erfindung betrifft daher auch die durch Zusatz von 0,01 bis 5 Gew.-% einer Verbindung der Formel I stabilisierten Kunststoffe, die gegebenenfalls noch andere bekannte und übliche Zusätze enthalten können. Die so stabilisierten Kunststoffe können in verschiedenster Form angewendet werden, z. B. als Folien, Fasern, Bändchen, Profile oder als Bindemittel für Lacke, Klebemittel oder Kitte.

Von besonderer Bedeutung ist die Anwendung in dünnen Schichten, wie in Form von Fasern, Folien und Lacken.

Die Herstellung und Verwendung der erfindungsgemäßen Verbindungen wird in den folgenden Beispielen näher beschrieben. Teile bedeuten darin Gewichtsteile und % Gewichtsprozente. Die Temperaturen sind in Celsius-Graden angegeben.

Beispiel 1

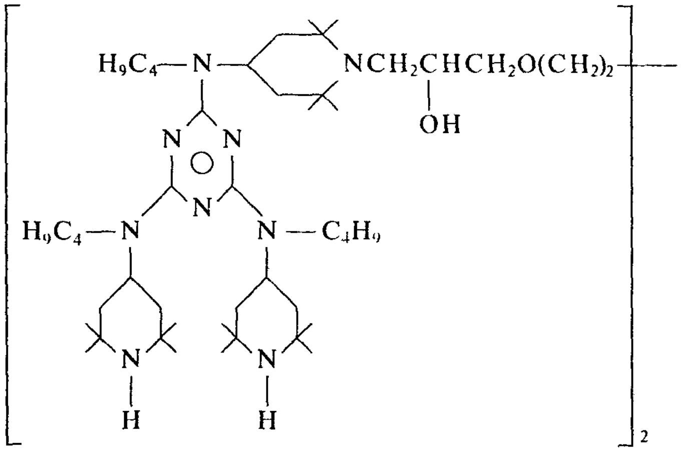

28,5 g 2,4,6-Tris-(2',2',6',6'-tetramethylpiperidinyl-4'-butylamino)-1,3,5-triazin (Smp. 165°) werden mit 4,0 g 1,4-Butandiol-diglycidyläther in 100 ml n-Octanol unter Rühren 10 Stunden auf 160° erwärmt. Anschließend wird das Lösungsmittel anfangs unter Wasserstrahlvakuum, dann unter Hochvakuum (0,001 Torr) bei 150° vollständig abdestilliert. Man erhält ein schwach gelbliches, festes Harz, das sich zu einem farblosen Pulver mit einem Smp. von ca. 150° pulverisieren läßt.

Beispiel 2

Verwendet man anstelle von 4,0 g 1,4-Butandioldiglycidyläther 6,8 g Bisphenol-A-Diglycidyläther und verfährt man im übrigen wie im Beispiel 1 beschrieben, so erhält man das Additionsprodukt folgender Formel als weißes Pulver mit einem Smp. von ca. 130°.

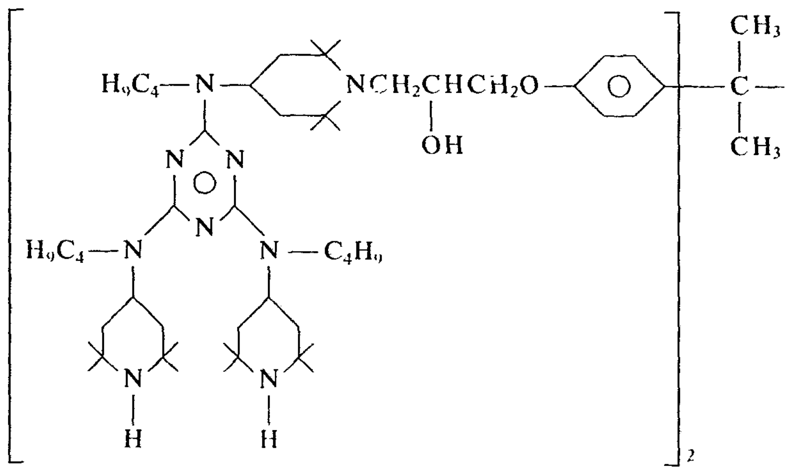

Beispiel 3

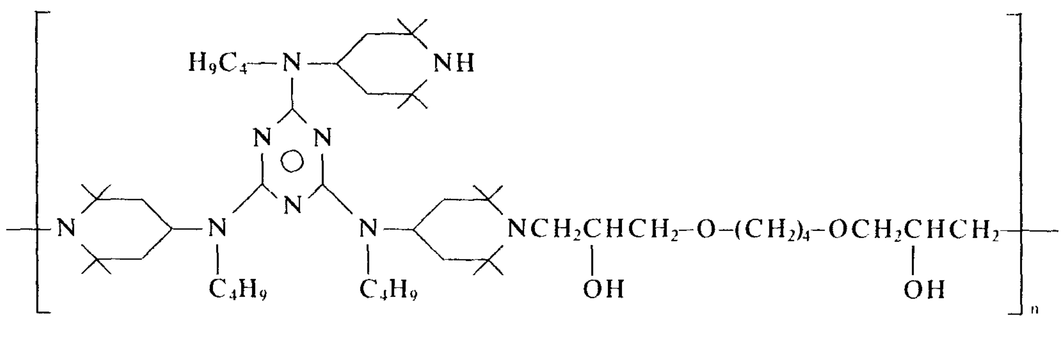

28,5 g 2,4,6-Tris-(2',2',6',6'-tetramethylpiperidinyl-4'-butylamino)-1,3,5-triazin (Smp. 165°) werden mit 8,0 g 1,4-Butandioldiglycidyläther in 100 ml Octanol unter Rühren 10 Stunden auf 160°

erwärmt. Anschließend wird das Lösungsmittel unter Vakuum (bis 0,001 Torr) bei 150–160° vollständig abdestilliert. Das erhaltene Polyadditionsprodukt ist ein gelbliches Harz, das sich nach dem Abkühlen zu einem farblosen Pulver mit einem Sinterpunkt von ca. 134° pulverisieren läßt und ein mittleres Molekulargewicht von ca. 4100 aufweist (Dampfdruckosmometrie).

Beispiel 4

Verwendet man anstelle von 8,0 g 1,4-Butandioldiglycidyläther 13,6 g Bisphenol-A-Biglycidyläther und verfährt man im übrigen wie im Beispiel 3 beschrieben, so erhält man ein Polyadditionsprodukt folgender Formel, als farbloses Pulver mit einem Sinterpunkt von ca. 132° und einem mittleren Molekulargewicht von ca. 3500.

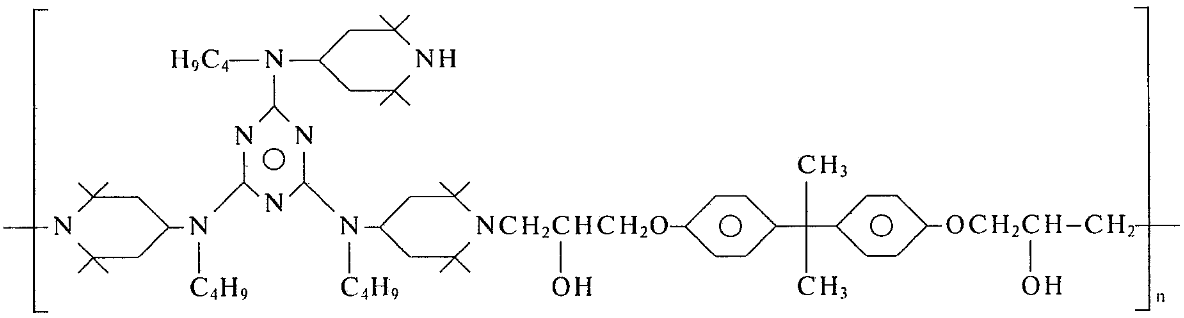

Beispiel 5

Verwendet man anstelle von 8,0 g 1,4-Butandioldiglycidyläther 15,2 g 1,1'-Diglycidyl-3,3'-methylen-bis-5,5-dimethylhydantoin und verfährt man im übrigen wie im Beispiel 3 beschrieben, so erhält man ein Polyadditionsprodukt folgender Formel als farbloses Pulver mit einem Erweichungspunkt von ca. 205° und einem mittleren Molekulargewicht von 2600 (Dampfdruckosmometrie).

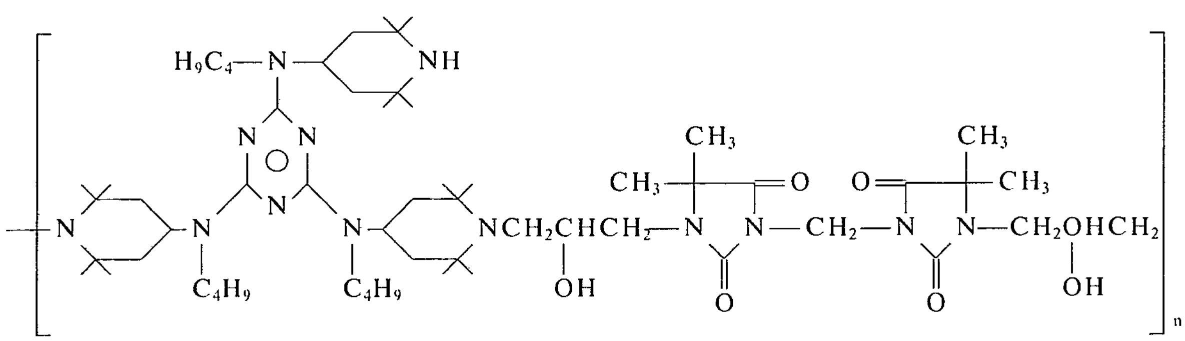

Beispiel 6

Verwendet man anstelle von 8,0 g 1,4-Butandioldiglycidyläther 8,6 g Neopentylglykol-diglycidyläther und verfährt man im übrigen wie im Beispiel 3 beschrieben, so erhält man ein Polyadditionsprodukt folgender Formel als leicht beiges Pulver mit einem Erweichungspunkt von ca. 85° und einem mittleren Molekulargewicht von ca. 2300.

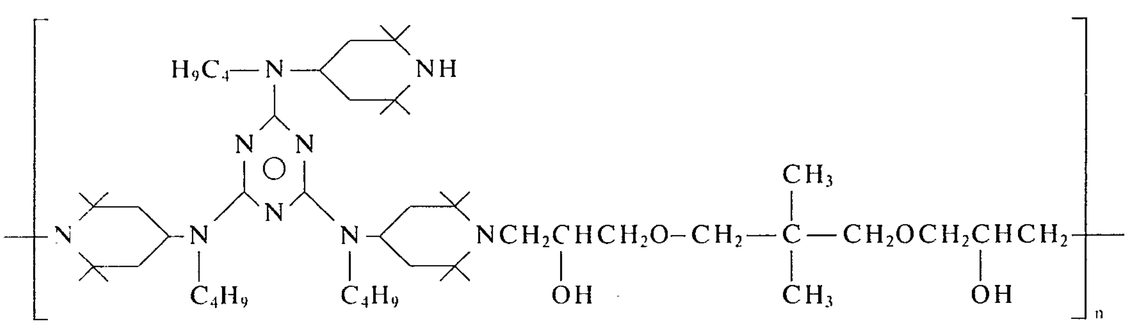

Beispiel 7

39,2 g 2-Isopropyloxy-4,6-bis-(2',2',6',6'-tetramethylpiperidinyl-4'-butylamino)-1,3,5-triazin (Smp. 90°) werden mit 14,1 g 1,4-Butandiol-diglycidyläther in 150 ml Äthylenglykol-monobutyläther unter Rühren in Stickstoffatmosphäre 10 Stunden am Rückfluß gehalten. Das Lösungsmittel wird anschließend unter Wasserstrahlvakuum, dann unter Hochvakuum (0,001 Torr) bei 150° vollständig abdestilliert. Das erhaltene Additionsprodukt folgender Formel kann zu einem farblosen Pulver zerkleinert werden, das einen Erweichungspunkt von ca. 91° und ein mittleres Molekulargewicht von ca. 2700 aufweist.

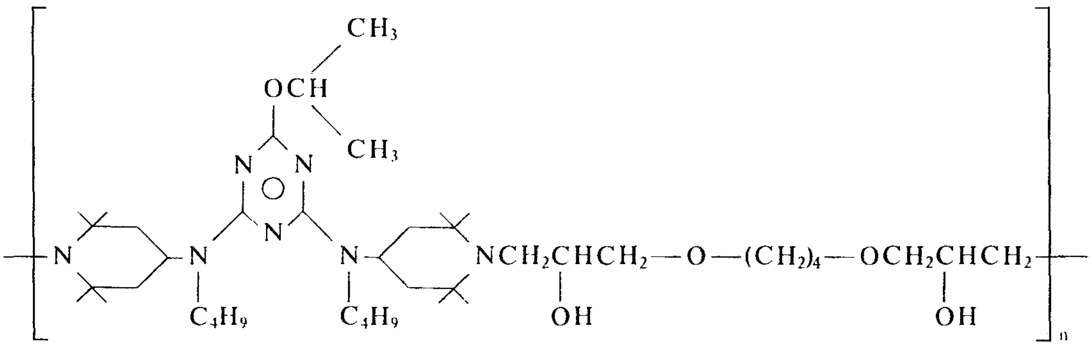

Beispiel 8

32 g 2.4.6-Tris-(2',2',6',6'-tetramethylpiperidinyl-4'-butylamino)-1,3,5-triazin und 4,5 g Triglycidylisocyanurat werden unter Stickstoff auf 180° erhitzt und die erhaltene Schmelze 8 Stunden bei dieser Temperatur gehalten. Die noch warme Schmelze wird in 200 ml Toluol aufgenommen. Durch Zusatz von Hexan fällt ein schwach beiges Produkt aus, das einen Smp. von 210° aufweist und dessen Hauptanteil folgende Strukturformel besitzt.

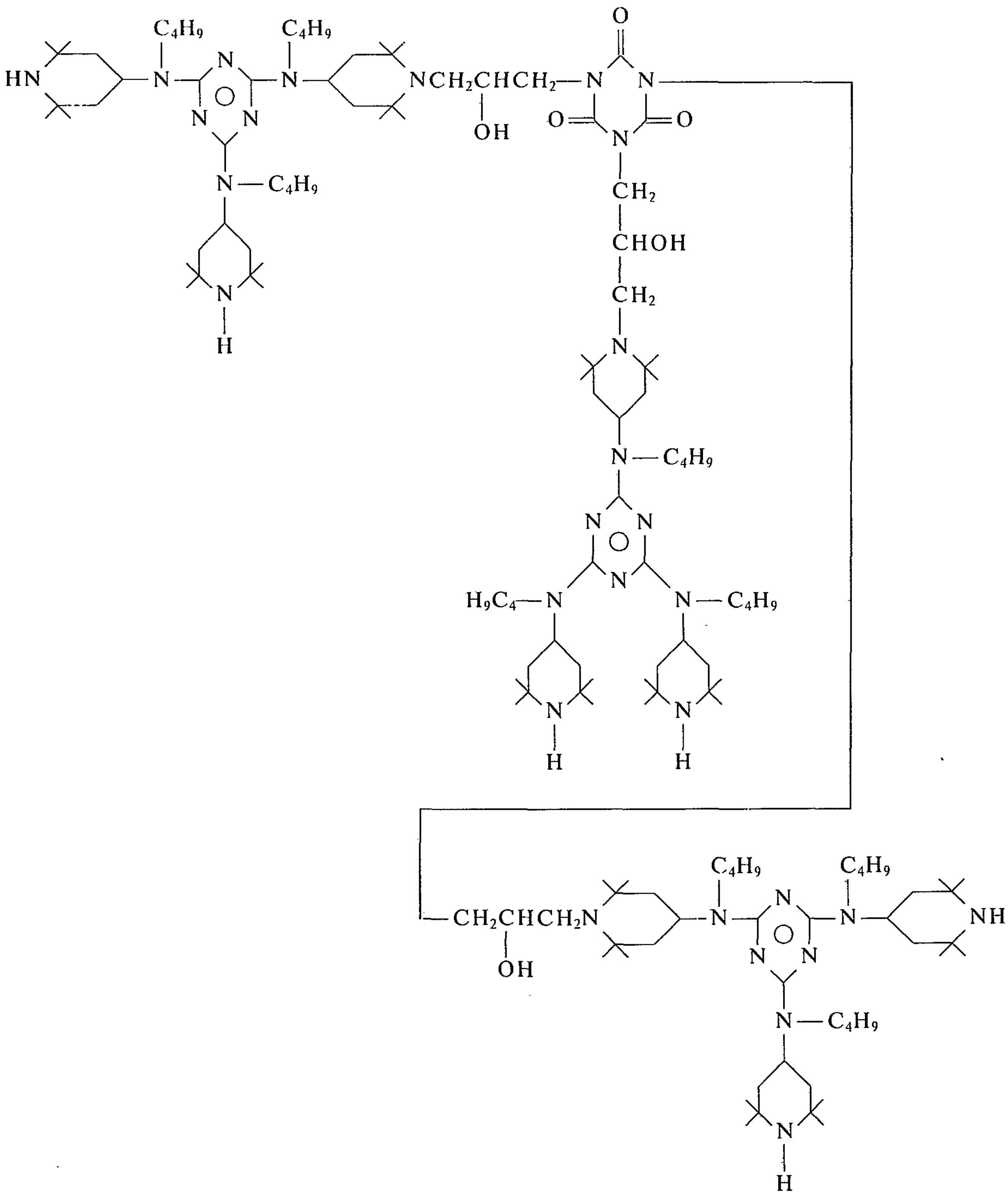

Beispiel 11

39,2 g 2-Isopropyloxy-4,6-bis(2',2',6',6'-tetramethylpiperidinyl-4'-butylamino)-1,3,5-triazin und 14,9 g 1,4-Dibrom-2-buten werden in 400 ml Methyläthylketon mit 20,7 g Kaliumcarbonat 48 Stunden am Rückfluß gehalten. Nach dem Abkühlen auf Raumtemperatur wird das ausgeschiedene KCl abfiltriert und die Methyläthylketonlösung im Vakuum eingedampft. Der Rückstand wird in 300 ml Toluol aufgenommen, die Lösung 3mal mit je 100 ml Wasser ausgewaschen, über Natriumsulfat getrocknet und im Vakuum eingedampft. Das erhaltene Produkt mit einem Erweichungspunkt von ca. 125° und einem mittleren Molekulargewicht von ca. 2700 besitzt folgende Formel:

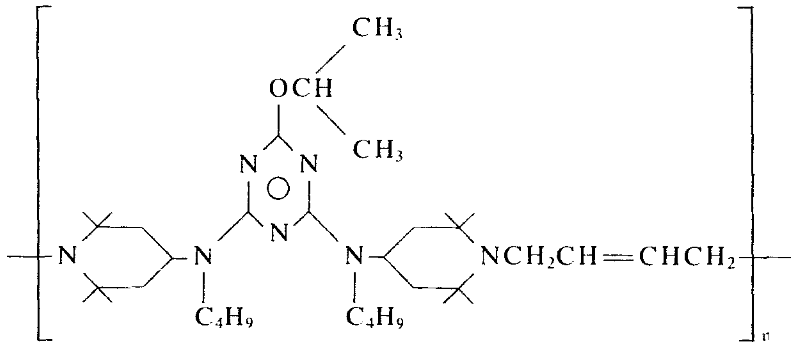

## Patentansprüche

1. Verbindungen der Formeln I oder II

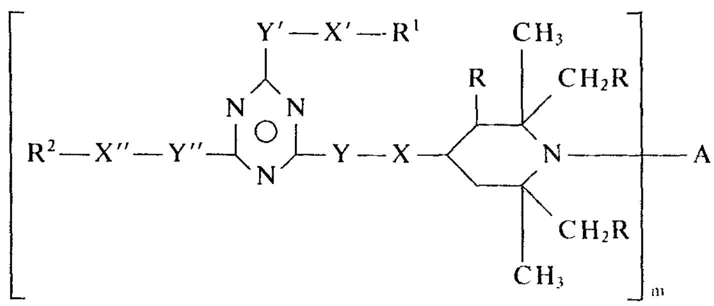

(I)

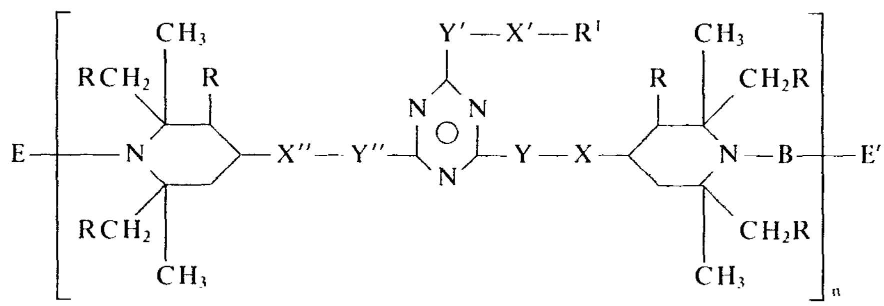

(II)

worin

| | |
|---|---|
| m | 2, 3 oder 4 ist, n 2 bis 50 ist, |
| X, X' und X" | eine direkte Bindung, $C_1$—$C_4$ Alkylen oder $-OCH_2CH_2CH_2-$, dessen O nicht an Y, Y' oder Y" gebunden ist, darstellen, |
| Y, Y' und Y" | —O—, —S—, —NH— oder $-NR^3-$ darstellen, |
| R | Wasserstoff oder $C_1$—$C_4$ Alkyl bedeutet, |
| $R^1$, $R^2$ und $R^3$ | $C_1$—$C_{18}$ Alkyl, $C_2$—$C_8$ Alkoxyalkyl, $C_2$—$C_4$ Hydroxyalkyl, $C_5$—$C_{12}$ Cycloalkyl, $C_7$—$C_{12}$ Aralkyl, $C_3$—$C_{18}$ Alkenyl, $C_6$—$C_{10}$ Aryl, durch 1 oder 2 $C_1$—$C_8$ Alkylgruppen und/oder OH und/oder $C_1$—$C_4$ Alkoxy substituiertes Phenyl oder eine Polyalkylpiperidinylgruppe der Formel III darstellt |

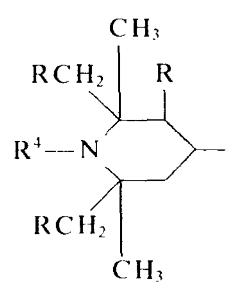

(III)

oder im Falle, daß Y' oder Y" $-NR^3-$ ist und X' oder X" eine direkte Bindung ist, $R^1$ und $R^3$ zusammen mit dem N-Atom einen Pyrrolidin-, Piperidin- oder Morpholinring bilden,

R⁴ Wasserstoff, O˙, $C_1$–$C_{12}$ Alkyl, Allyl oder Benzyl bedeutet,

A wenn m = 2 ist, $C_2$–$C_{12}$ Alkylen, $C_4$–$C_8$ Alkenylen, Xylylen oder einen Rest der Formel

$-CH_2-C\equiv C-CH_2-$ 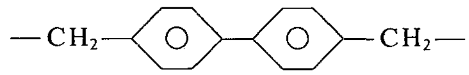

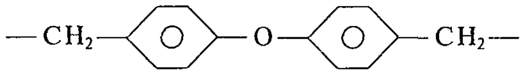

$-CH_2-COO-R^5-OOC-CH_2-$ $-CH_2-CH(OH)-CH_2-$

oder

$-CH_2CH(OH)CH_2-D-CH_2CH(OH)CH_2-$

darstellt,

wenn m = 3 ist, eine Gruppe der Formel

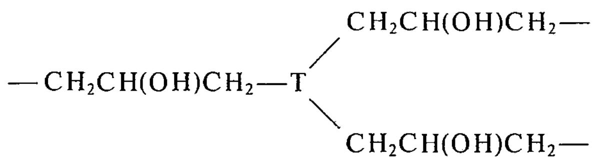

darstellt und

wenn m 4 ist, eine Gruppe der Formel

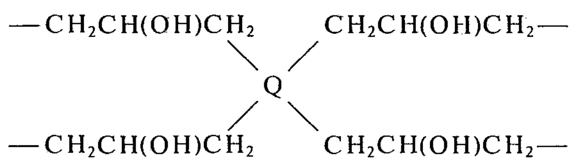

darstellt,

B $C_2$–$C_{12}$ Alkylen, $C_4$–$C_8$ Alkenylen, Xylylen oder einen Rest der Formel

$-CH_2-COO-R^5-OOC-CH_2-$ $-CH_2-CH(OH)-CH_2-$

oder

$-CH_2CH(OH)CH_2-D-CH_2CH(OH)CH_2-$

darstellt,

R⁵ $C_2$–$C_8$ Alkylen, $C_4$–$C_8$ Oxaalkylen oder Cyclohexylen darstellt,

D einen zweiwertigen Rest der Formel

$-O-R^6-O-$ $-O-C(O)-R^7-C(O)-O-$

$-OCH(R^8)CH_2O-R^6-OCH_2CH(R^8)O-$

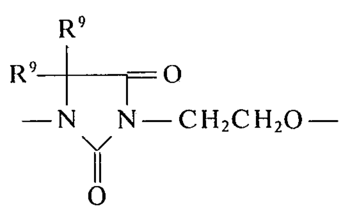 oder 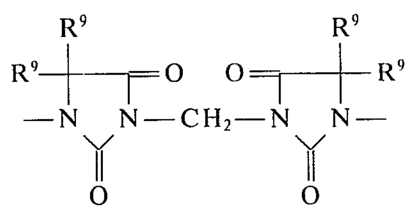

darstellt,

R⁶ $C_2$–$C_{12}$ Alkylen, $C_6$–$C_{12}$ Cycloalkylen, $C_6$–$C_{12}$ Arylen oder -Phenylen-Z-Phenylen- darstellt, worin Z

$-CH_2-$ $>C(CH_3)_2$ $-SO_2-$ oder $-O-$

bedeutet,

$R^7$ eine direkte Bindung, $C_1$—$C_{12}$ Alkylen, $C_2$—$C_6$ Alkenylen, $C_6$—$C_{12}$ Cycloalkylen oder Cycloalkenylen oder $C_6$—$C_{12}$ Arylen darstellt,

$R^8$ und $R^9$ Wasserstoff oder $C_1$—$C_4$ Alkyl sind,

T einen dreiwertigen Rest der Formeln

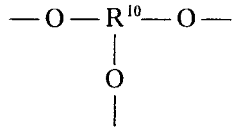
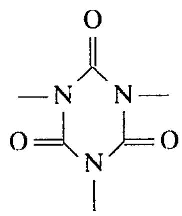
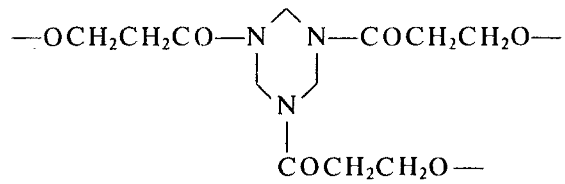

oder

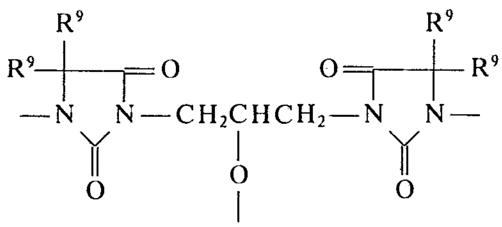

darstellt,

$R^{10}$ ein dreiwertiger aliphatischer Kohlenwasserstoffrest mit 3—10 C-Atomen ist,

Q einen vierwertigen Rest der Formel

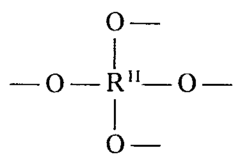
oder
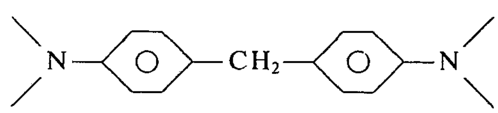

darstellt,

$R^{11}$ einen vierwertigen aliphatischen Kohlenwasserstoffrest mit 4—10 C-Atomen bedeutet und

E und E' Endgruppen darstellen.

2. Verbindungen gemäß Anspruch 1 der Formel I oder II, worin R Wasserstoff darstellt.

3. Verbindungen gemäß Anspruch 2 der Formel I oder II, worin Y, Y' und Y" unabhängig voneinander —NH— oder —$NR^3$— darstellen.

4. Verbindungen gemäß Anspruch 1 der Formel I, worin m 2 ist und A einen Rest der Formel

$$—CH_2CH(OH)CH_2—D—CH_2CH(OH)CH_2—$$

darstellt, wobei D die in Anspruch 1 gegebene Bedeutung hat.

5. Verbindungen gemäß Anspruch 1 der Formel II, worin B einen Rest der Formel

$$—CH_2CH(OH)CH_2—D—CH_2CH(OH)CH_2—$$

darstellt und D die in Anspruch 1 gegebene Bedeutung hat.

6. Verbindungen gemäß Anspruch 4, worin D eine Gruppe —O—$R^6$—O— darstellt und $R^6$ die in Anspruch 1 gegebene Bedeutung hat.

7. Verwendung von Verbindungen der Formel I oder II als Stabilisatoren für Polymere.

8. Stabilisierte Polymere, gekennzeichnet durch einen Gehalt von 0,01 bis 1,0 Gew.-%, berechnet auf das unstabilisierte Material, einer Verbindung der Formel I oder II gemäß Anspruch 1.

9. Stabilisiertes Polymer gemäß Anspruch 8, dadurch gekennzeichnet, daß das Polymer ein Polyolefin, ein Styrol-Polymer bzw. Copolymer, ein Polyamid oder ein Polyurethan ist.

10. Stabilisiertes Polymer gemäß Anspruch 8, dadurch gekennzeichnet, daß das Polymer ein Lackharz ist.

**Claims**

1. A compound of the formula I or II

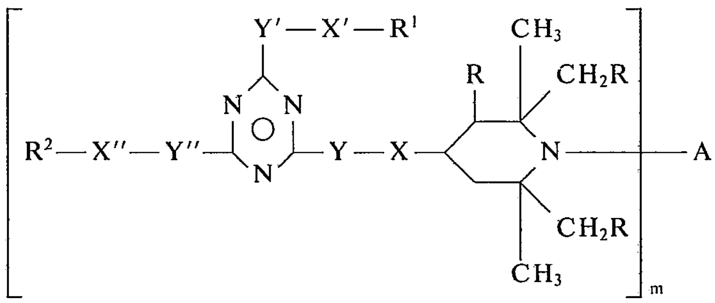

(I)

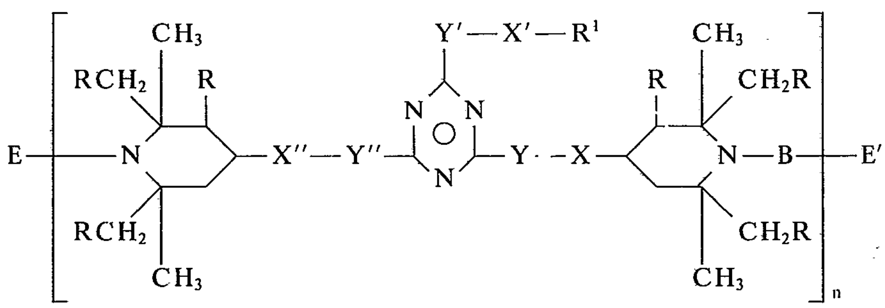

(II)

wherein

- m is 2, 3 or 4, n is 2 to 50,
- X, X′ and X″ are a direct bond, $C_1$–$C_4$ alkylene or $-OCH_2CH_2CH_2-$, the O of which is not bonded to Y, Y′e or Y″,
- Y, Y′ and Y″ are –O–, –S–, –NH– or $-NR^3-$,
- R is hydrogen or $C_1$–$C_4$alkyl,
- $R^1$, $R^2$ and $R^3$ are $C_1$–$C_{12}$alkyl, $C_2$–$C_8$alkoxyalkyl, $C_2$–$C_4$hydroxyalkyl, $C_5$–$C_{12}$cycloalkyl, $C_7$–$C_{12}$-aralkyl, $C_3$–$C_{18}$alkenyl, $C_6$–$C_{10}$aryl, phenyl which is substituted by one or two $C_1$–$C_8$-alkyl groups and/or by OH and/or by $C_1$–$C_4$alkoxy, or are a polyalkylpiperidinyl group of the formula III

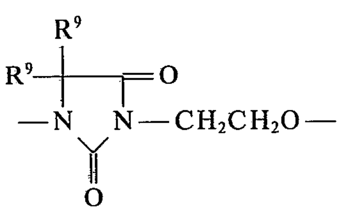

or, if Y′ or Y″ is $-NR^3-$ and X′ or X″ is a direct bond, $R^1$ and $R^2$ together with the nitrogen atom form a pyrrolidine, piperidine or morpholine ring,

- $R^4$ is hydrogen, $O^{\cdot}$, $C_1$–$C_{12}$alkyl, allyl or benzyl,
- A if m is 2, is $C_2$–$C_{12}$alkylene, $C_4$–$C_8$alkenylene, xylylene or a radical of the formula

$-CH_2-C\equiv C-CH_2-$

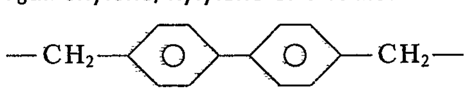

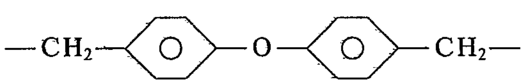

or

$-CH_2-COO-R^5-OOC-CH_2-$ $\quad$ $-CH_2-CH(OH)-CH_2-$

$-CH_2CH(OH)CH_2-D-CH_2CH(OH)CH_2-$

and, if m is 3, is a group of the formula

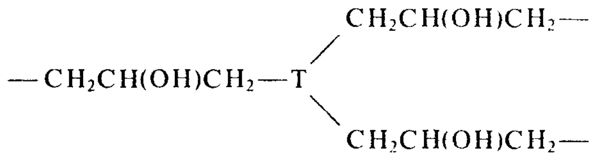

and, if m is 4, is a group of the formula

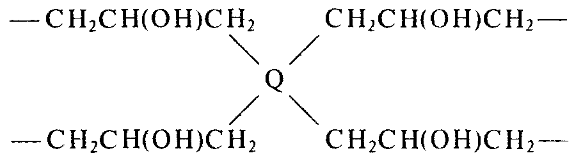

B is $C_2$–$C_{12}$alkylene, $C_4$–$C_8$alkenylene, xylylene or a radical of the formula

$—CH_2—COO—R^5—OOC—CH_2—$  $—CH_2—CH(OH)—CH_2$

or

$—CH_2CH(OH)CH_2—D—CH_2CH(OH)CH_2—$

$R^5$ is $C_2$–$C_8$alkylene, $C_4$–$C_8$oxaalkylene or cyclohexylene,

D is a divalent radical of the formula

$—O—R^6—O—$  $—O—C(O)—R^7—C(O)—O—$

$—OCH(R^8)CH_2O—R^6—OCH_2CH(R^8)O—$ or

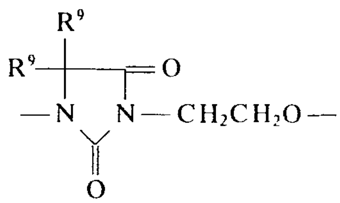

or

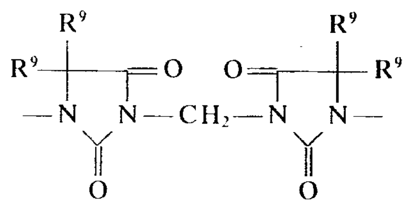

$R^6$ is $C_2$–$C_{12}$alkylene, $C_6$–$C_{12}$cycloalkylene, $C_6$–$C_{12}$arylene or -phenylene-Z-phenylene-, wherein Z is

$—CH_2—$  $>C(CH_3)_2$  $—SO_2—$ or $—O—$

$R^7$ is a direct bond, $C_1$–$C_{12}$alkylene, $C_2$–$C_6$alkenylene, $C_6$–$C_{12}$cycloalkylene or cycloalkenylene or $C_6$–$C_{12}$arylene,

$R^8$ and $R^9$ are hydrogen or $C_1$–$C_4$alkyl,

T is a trivalent radical of the formula

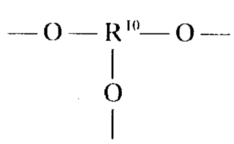

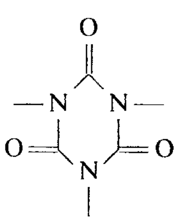

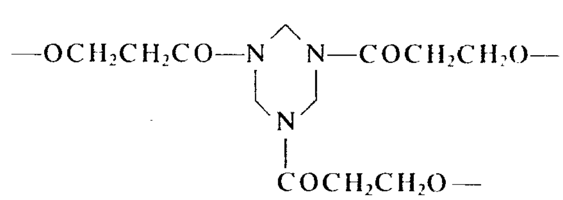

or

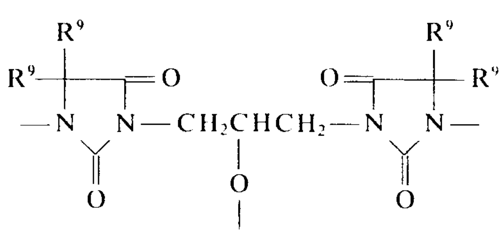

$R^{10}$ is a trivalent aliphatic hydrocarbon radical of 3 to 10 carbon atoms,
Q is a quadrivalent radical of the formula

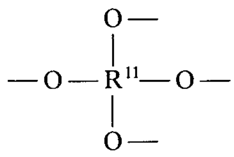 or 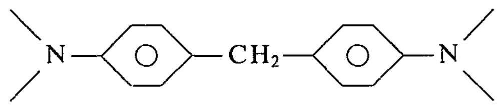 .

$R^{11}$ is a quadrivalent aliphatic hydrocarbon radical of 4 to 10 carbon atoms, and
E and E' are end groups.

2. A compound according to claim 1 of the formula I or II, wherein R is hydrogen.
3. A compound according to claim 2 of the formula I or II, wherein Y, Y' and Y", each independently of the other, are —NH— or —$NR^3$—.
4. A compound according to claim 1 of the formula I, wherein m is 2 and A is a radical of the formula

$$—CH_2CH(OH)CH_2—D—CH_2CH(OH)CH_2—$$

in which D is as defined in claim 1.
5. A compound according to claim 1 of the formula II, wherein B is a radical of the formula

$$—CH_2CH(OH)CH_2—D—CH_2CH(OH)CH_2—$$

and D is as defined in claim 1.
6. A compound according to claim 4, wherein D is a group —O—$R^6$—O— and $R^6$ has the meaning given in claim 1.
7. Use of a compound of the formula I or II as stabiliser for polymers.
8. A stabilised polymer which contains 0.01 to 1% by weight, based on the unstabilised material, of a compound of the formula I or II according to claim 1.
9. A stabilised polymer according to claim 8, wherein the polymer is a polyolefin, a styrene polymer or copolymer, a polyamide or a polyurethane.
10. A stabilised polymer according to claim 8, wherein the polymer is a film-forming resin.

**Revendications**

1. Les composés de formules I et II

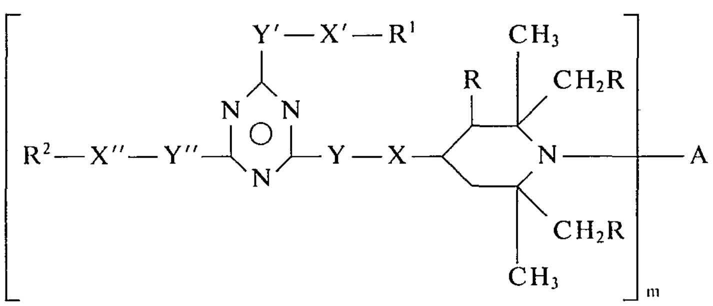 (I)

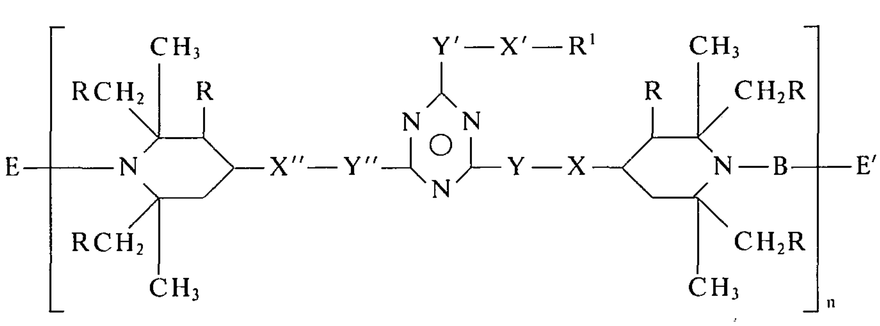 (II)

dans lesquelles

m est un nombre égal à 2, à 3 ou à 4, n un nombre de 2 à 50,

X, X' et X'' désignent des liaisons directes ou bien des alkylènes en $C_1$—$C_4$ ou des groupes $-OCH_2CH_2CH_2-$ dont l'atome d'oxygène n'est pas lié à Y, Y' ou Y'',

Y, Y' et Y'' représentent —O—, —S—, —NH— et $-NR^3$,

R est un atome d'hydrogène ou un alkyle en $C_1$—$C_4$,

$R^1$, $R^2$, $R^3$ désignent chacun un alkyle en $C_1$—$C_{18}$, un alcoxyalkyle en $C_2$—$C_8$, un hydroxyalkyle en $C_2$—$C_4$, un cycloalkyle en $C_5$—$C_{12}$, un aralkyle en $C_7$—$C_{12}$, un alcényle en $C_3$—$C_{18}$, un aryle en $C_6$—$C_{10}$, un phényl substitué par 1 ou 2 groupes alkyles en $C_1$—$C_8$ et/ou OH et/ou alcoxy en $C_1$—$C_4$ ou encore un groupe polyalkylpipéridinylique de formule III

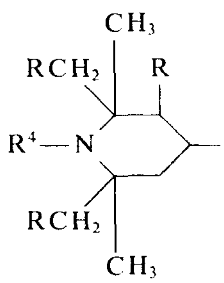

(III)

ou bien, dans le cas ou Y' ou Y'' est un groupe $-NR^3-$ et X' ou X'' une liaison directe, $R^1$ et $R^3$ forment ensemble et avec l'atome d'azote un cycle pyrrolidinique, pipéridinique ou morpholinique,

$R^4$ désigne l'hydrogène, $\dot{O}$, un alkyle en $C_1$—$C_{12}$ ou un groupe allyle ou benzyle,

A, si m = 2, est un radical alkylène en $C_2$—$C_{12}$, alcénylène en $C_4$—$C_8$, xylylène ou encore un radical de formule:

$-CH_2-C\equiv C-CH_2-$

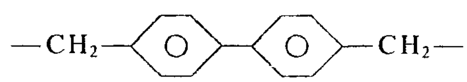

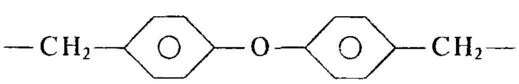

$-CH_2-COO-R^5-OOC-CH_2-$ $-CH_2-CH(OH)-CH_2-$

ou

$-CH_2CH(OH)CH_2-D-CH_2CH(OH)CH_2-$

si m = 3, un groupe de formule

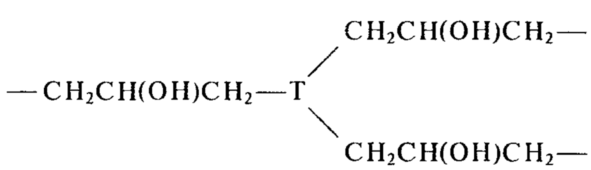

et si m = 4, un groupe de formule

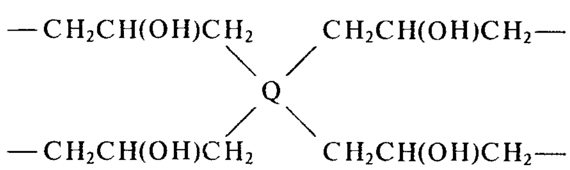

B désigne un alkylène en $C_2$—$C_{12}$, un alcénylène en $C_4$—$C_8$, un xylylène ou un radical

$-CH_2-COO-R^5-OOC-CH_2-$ $-CH_2-CH(OH)-CH_2-$

ou

$-CH_2CH(OH)CH_2-D-CH_2CH(OH)CH_2-$

$R^5$ est un alkylène en $C_2$—$C_8$, un oxaalkylène en $C_4$—$C_8$ ou un cyclohexylène,

D un radical divalent

$$—O—R^6—O— \qquad —O—C(O)—R^7—C(O)—O—$$

$$—OCH(R^8)CH_2O—R^6—OCH_2CH(R^8)O—$$

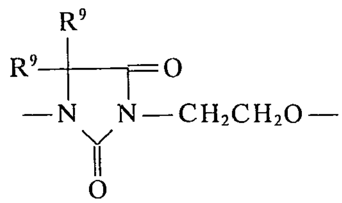 ou 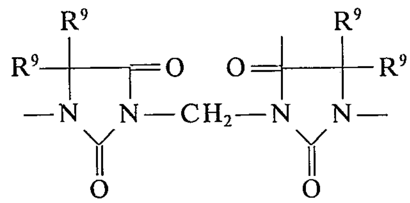

$R^6$ est un alkylène en $C_2$—$C_{12}$, un cycloalkylène en $C_6$—$C_{12}$, un arylène en $C_6$—$C_{12}$ ou un radical -phénylène-Z-phénylène-, Z désignant

$$—CH_2— \qquad >C(CH_3)_2 \qquad —SO_2— \quad \text{ou} \quad —O—$$

$R^7$ est une liaison directe, un alkylène en $C_1$—$C_{12}$, un alcénylène en $C_2$—$C_6$, un cycloalkylène en $C_6$—$C_{12}$ ou un cycloalcénylène ou un arylène en $C_6$—$C_{12}$, et

$R^8$ et $R^9$ l'hydrogène ou des alkyles en $C_1$—$C_4$,

T représente un radical divalent de formule:

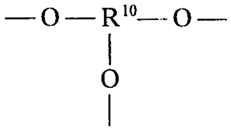 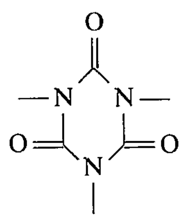 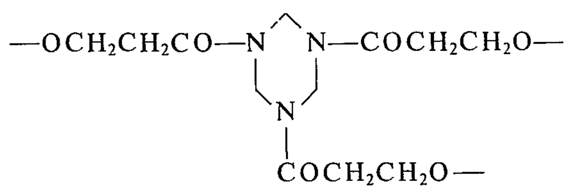

ou

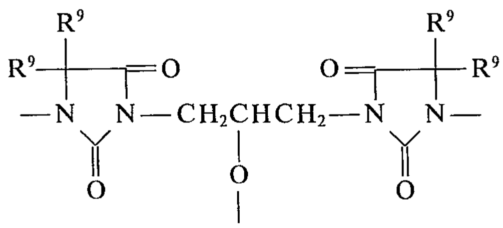

$R^{10}$ étant un radical hydrocarboné aliphatique trivalent en $C_3$—$C_{10}$,

Q désigne un radical tétravalent

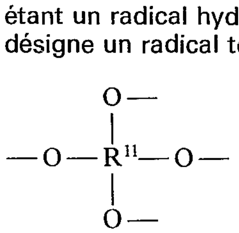 ou 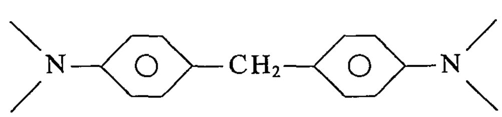

$R^{11}$ étant un radical hydrocarboné aliphatique tétravalent en $C_4$—$C_{10}$, et

E et E' sont des groupes terminaux.

2. Composés selon la revendication 1, de formule I ou II, dans lesquels R est l'hydrogène.

3. Composés selon la revendication 2, de formule I ou II, dans lesquels Y, Y' et Y" représentent chacun, indépendamment les uns des autres, un groupe —NH— ou —$NR^3$—.

4. Composés selon la revendication 1, de formule I, dans lesquels m = 2 et A est un radical

$$—CH_2CH(OH)CH_2—D—CH_2CH(OH)CH_2—$$

D ayant la signification donnée dans la revendication 1.

5. Composés selon la revendication 1, de formule II, dans lesquels B est un radical

$$-CH_2CH(OH)CH_2-D-CH_2CH(OH)CH_2-$$

D ayant la signification donnée dans la revendication 1.

6. Composés selon la revendication 4 dans lesquels D est un groupe $-O-R^6-O-$, $R^6$ ayant la signification donnée dans la revendication 1.

7. Utilisation de composés de formule I ou II pour stabiliser les matières polymères.

8. Matières polymères stabilisées, caractérisées en ce qu'elles contiennent 0,01 à 1%, du poids de la matière non stabilisée, d'un composé de formule I ou II selon la revendication 1.

9. Matières polymères stabilisées selon la revendication 8, caractérisées en ce que le polymère est une polyoléfine, un polymère ou un copolymère du styrène, un polyamide ou un polyuréthane.

10. Matières polymères stabilisées selon la revendication 8, caractérisées en ce que le polymère est une résine pour vernis.